# EUROPEAN PATENT SPECIFICATION

(11) **EP 3 093 190 B1**
(45) Date of publication and mention of the grant of the patent: **14.02.2018**
(21) Application number: 16169106.8
(22) Date of filing: 11.05.2016
(51) Int. Cl.: B60P 3/04, A01K 1/06, B60D 1/155

(54) **TRAILER FOR TREATING FOUR-LEGGED ANIMALS**
TRAILER ZUR BEHANDLUNG VON TIEREN
REMORQUE POUR LE TRAITEMENT DES ANIMAUX

(30) Priority: 11.05.2015 NL 2014787
(43) Date of publication of application: 16.11.2016
(73) Proprietor: Wopa Constructiebedrijf B.V., 7135 JV Harreveld (NL)
(72) Inventor: Wopereis, Johannes Wilhelmus Antonius, 7135 JV Harreveld (NL)
(74) Representative: V.O.

(56) References cited:
- DE-U1- 29 907 494
- US-A- 4 214 555
- US-A- 4 630 570
- US-B1- 7 527 281

## Description

### FIELD

The invention relates to a trailer for treating four-legged animals.

### BACKGROUND

Apparatus for treating four-legged animals such as stock is known from EP 2.656.730. This known apparatus includes a frame bounding an animal set-up space. On a rear side the animal set-up space is provided with an entrance opening, through which an animal to be treated is led into the animal set-up space. The animal set-up space forms a passage opening which is provided at the front side with an exit opening to bring the animal out of the animal set-up space after treatment. Both the entrance opening and the exit opening are provided with barriers to confine the animal to be treated in the animal set-up space for the treatment. During use of the apparatus, the apparatus rests on a fixed base or ground, so that it does not wobble, move or shift. Placement is such that the animals can be led through the entrance and exit opening into and out of the apparatus, respectively.

In daily practice, to enable the existing apparatus to be moved when not in use, it is provided with a wheel suspension with wheels, allowing the trailer to be hauled with the frame kept clear of the ground. This trailer with apparatus is further provided with a tow bar having an end that is provided with a coupling for coupling of the undercarriage to a towing vehicle. As the tow bar projects at the front side of the frame and the floor, the tow bar is situated in front of the passage opening on the front side of the frame, along which the treated animals leave the set-up space. In order not to impede passage of the animals, the tow bar is detachable, so that it can be removed from the area in front of the passage opening.

A disadvantage of the detachable tow bar is that detachment and attachment of the tow bar is a complex and time consuming process. To detach the tow bar, the tow bar needs to be disconnected, and also the brake cable, which extends partly along the tow bar, needs to be disconnected. When readying the trailer for the road, the brake cables need to be plugged in again and the tow bar needs to be connected to the chassis again. This may be rendered more difficult by excrements of the treated animals having soiled the connections. These need to be cleaned then before the brakes and/or the tow bar can be safely connected up and used. This renders moving the apparatus laborious and time consuming.

US 4 630 570 is drawn also to a trailer for treating four-legged animals. The known trailer is provided with a base frame and a tow bar frame. With this known trailer, the tow bar does not need to be detached. Instead, the tow bar frame is connected to the base frame in a manner pivotable about a vertical pivot near a corner point of the base frame, so that it can be pivoted away sideways.

### SUMMARY

A drawback of the trailer for treating four-legged animals known from US'570 is that the freedom of movement around the cart is impeded by the tow bar frame pivoted away sideways.

It is an object of the invention to provide a trailer for treating four-legged animals to enable making the area in front of the passage opening easy to pass for animals as well as subsequent readying of the trailer for transport in a user-friendly manner, while at the same time providing an optimum freedom of movement of a user around the trailer.

According to the invention, this object is achieved by providing a trailer according to claim 1. Accordingly, this concerns a trailer for treating four-legged animals, comprising:
- a floor and a frame which bounds an animal set-up space above said floor, which animal set-up space in top plan view is substantially elongate in a longitudinal direction for taking up and keeping positioned an animal to be treated with a median plane in the longitudinal direction, the frame having a passage opening at a front side of the animal set-up space;
- a barrier which is movable between an open position for allowing an animal to pass through the passage opening and a closed position in the passage to prevent an animal from passing through the passage;
- a wheel suspension connecting at least two wheels with the frame, each wheel being rotatable about a wheel axle extending perpendicular to a longitudinal direction of the trailer, the wheel suspension being bringable from a drive position in which the frame and floor is kept above a base or ground and is movable on wheels over it, to an operative position in which the frame rests on the floor surface and the wheels have been moved up relative to the frame;
- a tow bar which is movable sideways relative to the frame and the floor between a central position in which the tow bar in a longitudinal median plane projects forwards with respect to the frame and the floor, and a side position in which at least a front part of the tow bar, with respect to the position of the tow bar in the central position, is moved sideways for, for the purpose of the passing of an animal to or out of the passage, clearing an area in front of the passage opening;
characterized in that
- the front part of the tow bar which extends beyond the front side of the frame and the floor is pivotable about a horizontal pivot shaft between a swung-down position in which the front part extends substantially in a horizontal plane and a swung-up position in which the front part extends upwardly from the pivot shaft substantially in vertical direction.

With the trailer according to the invention , it is achieved that the area in front of the passage opening can be cleared in a user-friendly and relatively quick manner. This is achieved by the tow bar being arranged movably relative to the frame and the floor of the trailer. This makes it possible for the tow bar, in any case the part which projects at the front side of the frame and floor near the passage opening, to be easily and quickly moved out of the area in front of the passage opening to a side position. Detaching the tow bar and undoing and detaching the brake cables as is necessary in existing trailers, has thus become unnecessary. The time it takes to bring the trailer from a drive position into an operative position is thus kept as short as possible, so that considerable gain in time is attained in readying the trailer for treatment of animals at a location.

Conversely, it holds that also the readying of the trailer after treatment of the animals can be realized user friendly and quickly with the trailer according to the invention. To make the trailer ready for transport from the operative position, the tow bar is moved from the side position to the central position, in which, in a longitudinal median plane, it projects forward with respect to the floor and the frame. With this, the trailer is ready to be coupled to a towing vehicle. Mounting the tow bar and the brake cables is not necessary anymore with the trailer according to the invention. This leads to considerable gain in time in readying the trailer for transport.

What is more, removing any soiling from the brake cables and the tow bar is not necessary anymore to make the trailer ready for transport. With the existing trailers it was necessary to remove soiling, such as excrements of the treated animals, prior to the mounting of tow bar and brake cables to obtain a proper operation of the brakes in particular. This disadvantage is obviated with the invention in that the tow bar and the brake cables are not dismounted from the trailer anymore.

Further, the existing trailers entail the risk that parts that have been undone upon detaching the tow bar or the brake cables, get lost. The movable tow bar on the trailer according to the invention can be so constructed that no parts need to be wholly removed from the trailer to clear the passage opening. This reduces the risk of parts getting lost and further increases convenience of use of the trailer.

Owing to the front part of the tow bar being arranged in an upwardly and downwardly pivotable manner, an improved freedom of movement of the user around the trailer is realized. In the operative position of the trailer, the front part of the tow bar is brought into the swung-up position, so that it extends substantially vertically upwards. As a result, the user can move around the trailer easily without needing to step over the tow bar moved sideways. For moving the trailer the front part of the tow bar is brought into the swung-down position, in which the front part extends substantially horizontally.

In the trailer according to the invention it holds that the set-up space is bounded by a frame and/or a floor. The term *frame* is to be understood to mean an assembly configured to bound the set-up space. The frame may then be a self-supporting frame, but may also be supported by a chassis or the floor of the trailer. The frame may be built up from pipes, tubes, bars or combinations thereof, while the frame may also be provided with mesh or lattice material to further close off the set-up space. The frame may also, whether partly or not, be built up from plates, such as, for example, metal plates or plastic plates. These plates may be provided with openings or recesses. For the *floor* it holds that it can be defined as a construction that is suitable for carrying a four-legged animal. The construction can consist of mesh or lattice material of sufficient strength, sheet material, but also, for example, of a grid of bars or tubes on which a four-legged animal can be set up in the set-up space. Besides these stated possibilities, however, other possibilities of forming a frame and/or floor are not excluded. To be considered here, certainly in the case of a self-supporting frame, is a box or box-like housing which bounds a set-up space and which is provided with wheels and a wheel suspension.

The invention also provides a method for on site treating four-legged animals such as stock at a location, comprising:
- providing a trailer according to any one of the preceding claims;
- towing the trailer to the location;
- bringing the trailer from the drive position to the operative position;
- bringing the tow bar from the central position to the side position;
- treating the animals to be treated in the trailer, the animals, at least prior to or after the treatment, each passing through the passage and the area in front of the passage next to the tow bar in the side position;
- after completion of the last treatment at the location, bringing the trailer from the operative position to the drive position and bringing the tow bar from the side position to the central position; and
- towing the trailer to a destination at a distance from the location.

An advantage of the method according to the invention is that the time required for bringing the trailer from an operative position to a drive position and vice versa is considerably shortened with respect to the existing trailers. In addition, it holds that the user-friendliness of the method according to the invention is increased with respect to the existing methods. This is due to the fact that the tow bar is configured to be movable sideways, so that the passage opening can be cleared in a user-friendly and quick manner. Removing and fitting the tow bar and brake cables is thus unnecessary. This has as a consequence that the treatment of the animals to be treated can be started shortly after arrival at the location. Following the treatment the trailer can likewise be easily and quickly brought from the operative position to the drive position. This results in a considerable gain in time prior to and following the treatment, so that work can be done more efficiently and more cost-effectively.

Further elaborations of the invention are described in the subclaims and will be further clarified hereinbelow on the basis of examples, with reference to the figures.

### BRIEF DESCRIPTION OF THE FIGURES

Figure 1 shows a first perspective view of an example of a trailer with the tow bar in the central and swung-down position;
Figure 2 shows a second perspective view of the trailer of Figure 1;
Figure 3 shows a perspective view of the trailer of Figure 1 with the tow bar in the side and swung-up position;
Figure 4 shows a bottom view of the trailer of Figure 3; and
Figure 5 shows a side view of the trailer of Figure 3.

### DETAILED DESCRIPTION

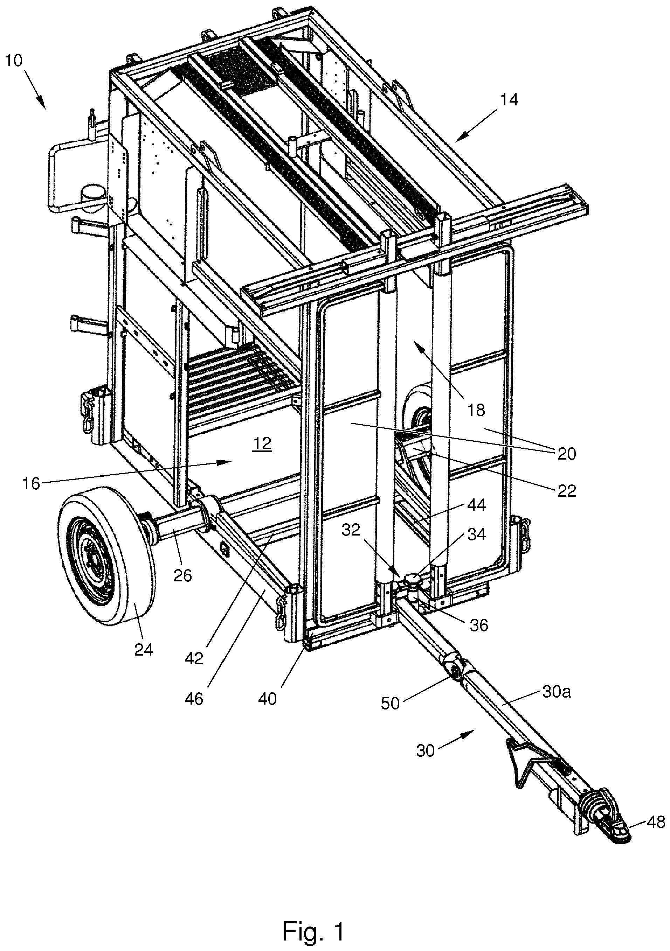

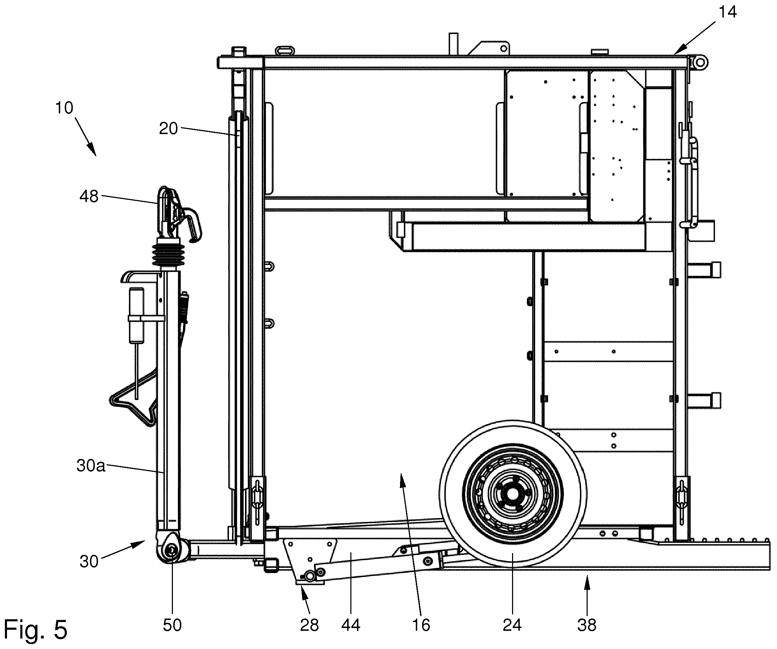

Figures 1-5 show an example of the trailer according to the invention incorporating various embodiments as described in the subclaims. It is noted here that the embodiments can also be applied independently of each other and that the invention is not limited to the example shown in the figures. The reference numerals used in the detailed description, the figures and the claims are for clarification only and have no limiting effect. An embodiment may also be implemented in a different manner than represented in the example that is shown in the figures.

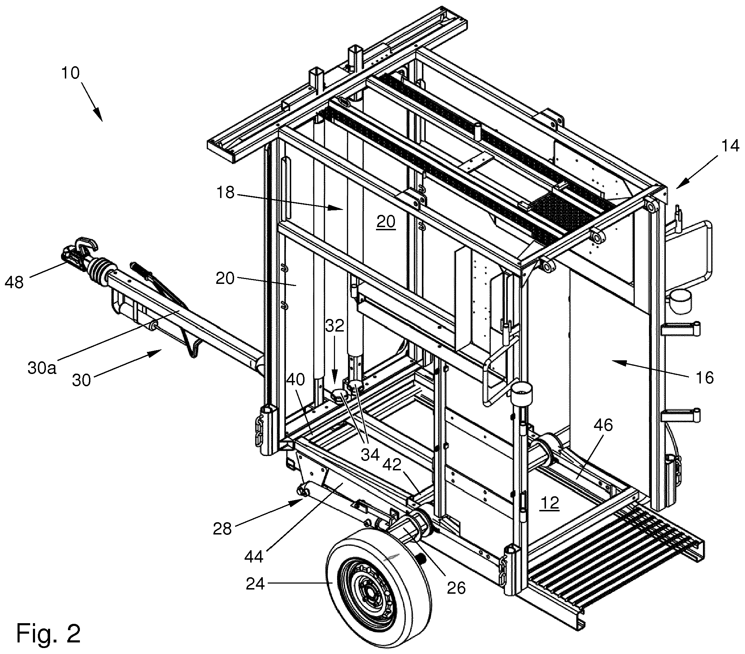

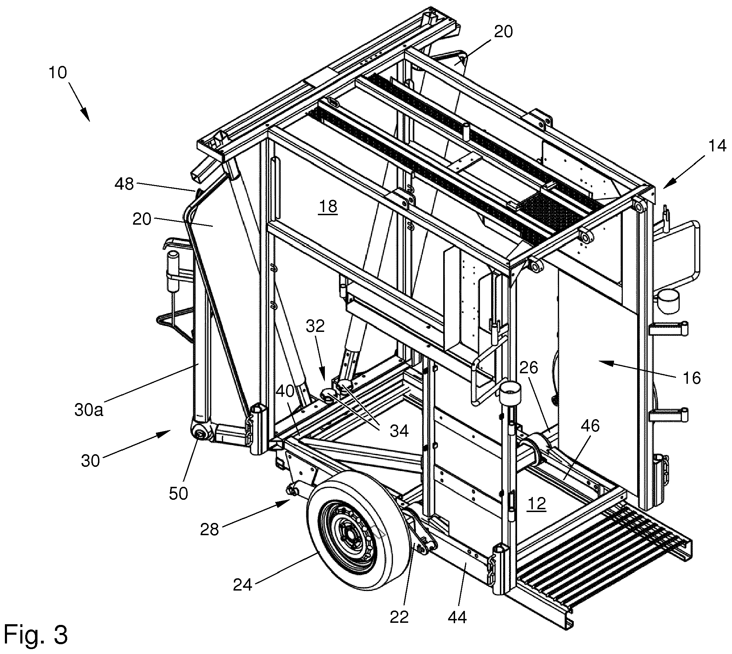

In general terms, the invention comprises a trailer 10 for treating four-legged animals. The trailer 10 comprises a floor 12 and a frame 14 which bounds an animal set-up space 16 above the floor 12. The animal set-up space 16, viewed in top plan view, is substantially elongate in a longitudinal direction for taking up and keeping positioned an animal to be treated with a median plane in the longitudinal direction. The frame 14 has a passage opening 18 at a front side of the animal set-up space 16. The passage opening 18 can be an entrance side, an exit side or both an entrance side and an exit side. The trailer 10 further comprises a barrier 20 which is movable between an open position for allowing an animal to pass through the passage opening 18 and a closed position in the passage opening 18 for preventing an animal from passing through the passage 18. The trailer 10 is provided with at least one wheel suspension 22 which connects at least two wheels 24 with the frame 14. Each wheel 24 is rotatable around a wheel axle 26 which extends perpendicular to a longitudinal direction of the trailer 10. The wheel suspension 22 is bringable from a drive position in which the frame 14 and the floor 12 is held above a base or ground and is movable on wheels over it, to an operative position in which the frame 14 rests on the floor surface and the wheels 24 have been moved up relative to the frame 14. Also, the trailer 10 is provided with a tow bar 30 which is movable sideways relative to the frame 14 and the floor 12 between a central position in which the tow bar 30 in a longitudinal median plane projects forwards with respect to the frame 14 and the floor 12, and a side position, in which at least a front part 30a of the tow bar 30 has been moved sideways relative to the position of the tow bar 30 in the central position, for, for the purpose of the passing of an animal to or out of the passage, clearing an area in front of the passage opening 18. The front part 30a of the tow bar 30, which extends beyond the front side of the frame 14 and the floor 12, is pivotable about a horizontal pivot shaft 50, so that the front part 30a is pivotable between a swung-down position and a swung-up position. In the swung-down position, the front part extends substantially in a horizontal plane, of which an example is shown in Figure 1 and Figure 2. In the swung-up position, the front part 30a extends upwards from the pivot shaft 50 substantially in vertical direction. An example of this is shown in Figures 3-5.

With the trailer 10 according to the invention, the passage opening 18 and the passage area in front of it are cleared when the tow bar 30 has been brought in the side position. Without the swing-up possibility of the front part 30a of the tow bar 30, the user could less easily move around the trailer 10 because then the front part 30a of the tow bar 30 would extend forwards at an angle to the longitudinal direction of the frame 14. To optimize the freedom of movement of the user around the trailer 10, the front part 30a of the tow bar 30 is arranged in an upwardly and downwardly pivotable manner. In the operative position of the trailer 10, the front part 30a of the tow bar 30 is brought in the swung-up position, so that it extends substantially vertically upwards. As a consequence, the user can easily move around the trailer 10 without needing to step over the tow bar 30 moved sideways. An example of the condition in which the front part 30a of the tow bar 30 is in the swung-up position is shown in Figures 3-5. For moving the trailer 10, the front part 30a of the tow bar 30 is brought in the swung-down position, in which the front part 30a extends substantially horizontally. An example of the trailer with the tow bar 30 in the swung-down position is shown in Figure 1 and Figure 2. The front part 30a may be provided with a fixing assembly to fix the front part 30a in the swung-down position, so that the front part 30a cannot move to the swung-up position during transport. After the trailer 10 has been unhitched, the fixing assembly can be released, so that the front part 30a is movable from the swung-down position to the swung-up position and vice versa.

Further advantages of the trailer 10 according to the invention have already been described in the summary, to which reference is made here.

Figures 1 and 2 show the trailer in the condition where it is movable on wheels. Clearly, the wheels 24 have been moved down with respect to the frame 14. Further, the front part 30a of the tow bar 30 is swung down and the tow bar 30 is in the central position.

Figures 3-5 show the example of a trailer 10 in the operative position, in which the wheels 24 have been moved up relative to the frame 14 and the frame 14 rests directly on a supporting floor surface. The front part 30a of the tow bar 30 has been swung up and the tow bar 30 has been moved away sideways to a side position.

The trailer 10 can be implemented in several embodiments. Thus, moving the tow bar 30 sideways can be carried out in various manners, for instance by means of a translating movement or a pivoting movement of a portion of the tow bar or the whole tow bar 30. The translating movement can for instance be facilitated by mounting the tow bar 30 on a rail, the tow bar 30 being arranged on the rail so as to be movable sideways throughout the length thereof. However, the tow bar 30 may also be mounted, by an end 30b, on a fixed point on the frame 14 or the floor 12 and be moved sideways at least partly by a pivotal movement as for instance shown in the example of Figures 3-5. Further, supporting the trailer 10 on the fixed base or ground in the operative position can be carried out in various manners. The wheel suspension 22 may be configured to be upwardly movable until the wheels 24 come above the fixed base or ground, so that the trailer 10 in the operative position rests completely on the frame 14. This involves no tilting, or only very limited tilting, of the frame 14 and the floor 12, so that the frame 14 and the floor 12 in the operative position are directed substantially horizontally (see Figures 3-5).

On the other hand, the wheel suspension 22 may also be moved up only partly, so that the trailer 10 in the operative position is supported partly on a supporting structure 28 and partly on the wheels 24 and the wheel suspension 22.

In an embodiment, the tow bar 30 can be pivotable between the central position and the side position.

Pivotable arrangement of the tow bar 30 on the frame 14 or the floor 12 has the advantage that the brake cables do not need to be uncoupled from the tow bar 30, but can also remain coupled to the tow bar 30 during pivoting movement. It may then be elected to connect the tow bar 30 and the wheel suspension 22 with each other, such that the wheel suspension 22 pivots along as the tow bar 30 is pivoted. A pivotable tow bar 30 is shown in Figures 1-5. Figure 1 and Figure 2 show an example of the trailer 10 with the tow bar 30 in the central position (the drive position). The front part 30a of the tow bar 30 extends substantially forwards in the longitudinal median plane and is provided at the front with a towing hook coupling 48 to couple the tow bar 30 to a towing vehicle. Figures 3-5 show an example of the trailer 10 in the operative position, where the front part 30a of the tow bar 30 has been moved sideways to the side position. It is clearly visible that the passage opening 18 and the area in front of the passage opening 18 have been cleared to let the animals to be treated pass into and/or out of the animal set-up space 16.

In an embodiment the trailer 10 can further comprise a blocking assembly 32 which is arranged to block at least the front part 30a of the tow bar 30 from sideways movement. The blocking assembly 32 may be operable to go over between a blocked position in which the blocking assembly blocks the tow bar 30 from the sideways movement, and an unblocked position in which the tow bar 30 is freely movable between the central position and the side position.

By providing a blocking assembly 32, an increased safety is achieved. Movement of the tow bar 30, or in any case its front part 30a, during transport is prevented by the blocking assembly 32. The blocking assembly 32 may be implemented in various manners, the embodiments being at least partly determined by the manner in which the sideways movement is performed. In the case where a translatable tow bar 30 is opted for, the blocking assembly 32 can engage the tow bar 30 at various points to block and unblock it. This can be, for example, a blocking of the rail on which the tow bar 30 is arranged, so that the translating movement is blocked. If it is elected to implement the translatable tow bar 30 with gear/rack assemblies and a crank connected thereto, the translatable movement can also be prevented by blocking the crank and/or the gears. Also when a pivotable tow bar 30 is used, various embodiments are possible. Thus, the blocking assembly 32 may be implemented as a slide blocking. The slide is then slidably connected to the frame 14 and, in a slid-out position, blocks the pivotal movement of the tow bar 30, or at least the front part 30a thereof. An alternative is formed by a blocking assembly 32 that consists of sprung or resilient projections and slotted holes, whereby one of the projections or the slotted holes is provided on the tow bar 30 and the other of the projections or the slotted holes is provided on the floor 12 or the frame 14 of the trailer 10. In the blocked position, the projections fall into the slotted holes, so that the pivotal movement of the tow bar 30 is blocked. The tow bar 30 can be brought into the unblocked position by pushing the resilient projections out of the slotted holes, so that the tow bar 30 is movable. However, the blocking assembly 32 according to the invention is not limited to the examples described here, but can also comprise other suitable implementations of the blocking assembly 32 known to those skilled in the art.

In an embodiment, the blocking assembly 32 may be arranged near the front side of the frame 14 and the floor 12.

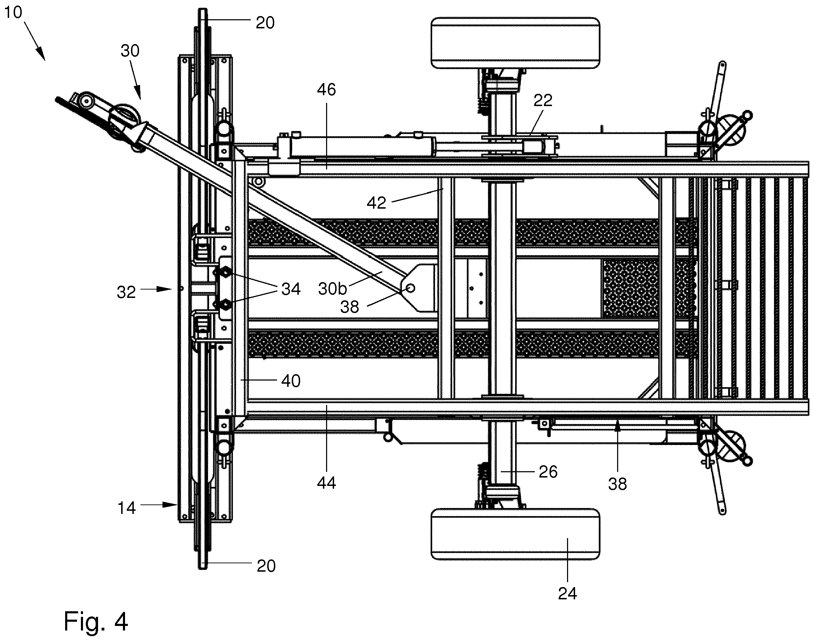

The blocking assembly 32 may be arranged at various places on the frame 14 and/or the floor 12 of the trailer 10. With this embodiment, however, a further improvement of the convenience of use is achieved. By fitting the blocking assembly 32 at the front side of the frame 14 and the floor 12, accessibility is ensured. Operating the blocking assembly 32 for blocking and unblocking the tow bar 30 is relatively simple in that the blocking assembly 32 is arranged at this accessible place. If the tow bar 30 is pivotably arranged, it holds that unblocking and immediate pivoting away of the tow bar 30 can be performed practically in a single movement. Additionally, it holds that replacing parts of the blocking assembly 32, if necessary, is relatively easily feasible if the blocking assembly 32 is arranged near the front side of the frame 14 and the floor 12. Further, it holds that the blocking assembly 32, if arranged at the front side of the floor 12 and the frame 14, is, in principle, not situated under the trailer 10 itself during the operative condition. As a consequence, any excrements of the animals to be treated in the animal set-up space 16 do not fall onto the blocking assembly 32, so that it gets soiled and/or damaged less readily. Operational reliability is thus substantially preserved. An example of a blocking assembly 32 that is arranged near the front of the floor 12 and the frame 14 is clearly visible in Figure 3 and Figure 4.

In an embodiment, the blocking assembly 32 can comprise a pin and hole assembly. The pin and hole assembly comprises at least one pin 34 and at least one hole 36 near the front of the frame 14 and the floor 12. The hole 36 and the pin 34 are such that the tow bar 30 is kept in the central position when the pin 34 is in the hole 36. When the pin 34 is outside the hole 36, the tow bar 30 is movable sideways.

With this embodiment, a simple and reliable blocking assembly 32 is realized. For the implementation, it may be elected to provide a single pin 34, which is fitted through a hole 36, formed in the tow bar 30. Also, two separate holes 36 may be opted for, each provided on either side of the tow bar 30 in the central position, on the frame 14 or the floor 12, as is visible in particular in Figure 1. When each of the pins 34 is in an associated hole 36, the tow bar 30 is blocked from sideways movement. Unblocking is carried out by bringing one or both of the pins 34 outside of the eye 36. An example of a trailer 10 with a blocking assembly 32 consisting of two pins 34 and associated holes 36 is shown in the figures. The pins 34 in this example may be wholly detachable from the trailer. It may be advantageous to connect the pins 34 with the frame 14 or the floor 12, for instance by means of a chain, rope or wire, so that the pins 34 do not form loose parts that may get lost upon removal from the hole 36 associated with a pin 34. Further, each pin 34 may be provided with a flange which prevents the pin 34 from being detached completely from the associated hole 36 and a compression spring may be provided which urges the pin 34 into the closed position.

In an embodiment, the frame 14 of the trailer 10 can comprise a first cross girder 40 at a front of the frame 14 and a second cross girder 42, extending parallel to the first cross girder 40. The frame 14 can further comprise a first longitudinal girder 44 and a second longitudinal girder 46, which are opposite each other and extend from the second, rear cross girder 42 to the first, front cross girder 40. A first end 30b of the tow bar 30 may then be connected to the second cross girder 42 in a manner pivotable about a pivot 38 and be coupled to the first cross girder 40 for guided sideways movement along an arc about the pivot mentioned.

Such a construction yields a robust connection between the frame 14 and the pivotable tow bar 30.

The invention further comprises a method for on site treating four-legged animals, such as stock, at a location. The method comprises providing a trailer 10 according to the invention and towing the trailer 10 to the location. The method further comprises bringing the trailer 10 from the drive position to the operative position and bringing the tow bar 30 from the central position to the side position. Next, the method comprises treating the animals to be treated in the trailer 10. The animals, at least prior to or following treatment, each pass through the passage 18 and the area in front of the passage 18 next to the tow bar 30 in the side position. Further, the method comprises, after completion of the last treatment at the location, bringing the trailer 10 from the operative position to the drive position, and bringing the tow bar 30 from the side position to the central position. The method also comprises towing the trailer 10 to a destination at a distance from the location mentioned.

In an embodiment of the method, with the trailer 10 implemented with a tow bar 30 configured to be swung down and up, the method further comprises bringing the tow bar from the swung-down to the swung-up condition upon arrival at the location and, after completion of the last treatment at the location, bringing the tow bar from the swung-up condition to the swung-down condition.

The various embodiments described above can be applied independently of each other and be combined with each other in different ways. The reference numerals in the detailed description and the claims do not limit the description of the embodiments and the claims, and serve for clarification only.

### LEGEND

10 - trailer
12 - floor
14 - frame
16 - set-up space
18 - passage opening
20 - barrier
22 - wheel suspension
24 - wheels
26 - rotation axis
28 - supporting structure
30 - tow bar
30a - front part of tow bar
30b - first end of tow bar
32 - blocking assembly
34 - pin
36 - hole
38 - pivot
40 - first cross girder
42 - second cross girder
44 - first longitudinal girder
46 - second longitudinal girder
48 - coupling for coupling to a towing vehicle
50 - horizontal pivot shaft

## Claims

1. A trailer (10) for treating four-legged animals, comprising:
- a floor (12) and a frame (14) which bounds an animal set-up space (16) above said floor (12), which animal set-up space (16) in top plan view is substantially elongate in a longitudinal direction for taking up and keeping positioned an animal to be treated with a median plane in said longitudinal direction, the frame (14) having a passage opening (18) at a front side of the animal set-up space (16);
- a barrier (20) which is movable between an open position for allowing an animal to pass through the passage opening (18) and a closed position in said passage (18) for preventing an animal from passing through the passage (18);
- a wheel suspension (22) connecting at least two wheels (24) with the frame (14), each wheel (24) being rotatable about a wheel axle (26) extending perpendicular to a longitudinal direction of the trailer (10), the wheel suspension (22) being bringable from a drive position in which the frame (14) and the floor (12) is kept above a base or ground and is movable on wheels over it, to an operative position in which the frame (14) rests on the floor surface and the wheels (24) have been moved up with respect to the frame (14);
- a tow bar (30) which is movable sideways relative to the frame (14) and the floor (12) between a central position in which the tow bar (30) in a longitudinal median plane projects forwards with respect to the frame (14) and the floor (12), and a side position in which at least a front part (30a) of the tow bar (30), with respect to the position of the tow bar in the central position, is moved sideways for, for the purpose of the passing of an animal to or out of the passage (18), clearing an area in front of said passage opening (18);
**characterized in that**
- the front part (30a) of the tow bar (30) which extends beyond the front side of the frame (14) and the floor (12) is pivotable about a horizontal pivot shaft (50) between a swung-down position in which said front part extends substantially in a horizontal plane and a swung-up position in which said front part extends upwardly from said pivot shaft (50) substantially in vertical direction.

2. The trailer according to claim 1, wherein the tow bar (30) is pivotable between the central position and the side position.

3. The trailer according to claim 1 or 2, further comprising a blocking assembly (32) which is arranged to block at least said front part (30a) of the tow bar (30) from sideways movement, wherein said blocking assembly (32) is operable to go over between a blocked position, in which said blocking assembly blocks the tow bar from said sideways movement, and an unblocked position, in which the tow bar is freely movable between the central position and the side position.

4. The trailer according to claim 3, wherein the blocking assembly (32) is arranged near the front side of the frame (14) and the floor (12).

5. The trailer according to claim 3 or 4, wherein the blocking assembly (32) comprises a pin and hole assembly, wherein the pin and hole assembly comprises at least one pin (34) and at least one hole (36) near the front side of the frame (14) and the floor (12), wherein the hole (36) and the pin (34) are such that the tow bar (30) is kept in the central position when the pin (34) is in the hole (36) and the tow bar (30) is movable sideways when the pin (34) is outside the hole (36).

6. The trailer according to any one of the preceding claims, wherein the frame (14) comprises:
- a first cross girder (40) on a front side of the frame (14);
- a second cross girder (42) extending parallel to the first cross girder (40); and
- a first longitudinal girder (44) and a second longitudinal girder (46), which are located opposite each other and extend from the second, rear cross girder (42) to the first, front cross girder (40);
wherein a first end (30b) of the tow bar (30) is connected to the second cross girder (42) in a manner pivotable about a pivot (38) and is coupled to the first cross girder (40) for guided sideways movement along an arc about said pivot (38).

7. A method for on site treating four-legged animals such as stock at a location, comprising:
- providing a trailer (10) according to any one of the preceding claims;
- towing the trailer (10) to the location;
- bringing the trailer (10) from the drive position to the operative position;
- bringing the tow bar from the central position to the side position;
- treating the animals to be treated in the trailer (10),
wherein the animals, at least prior to or after the treatment, each pass through said passage (18) and said area in front of said passage (18) next to the tow bar (30) in the side position;
- after completion of the last treatment at said location, bringing the trailer (10) from the operative position to the drive position and bringing the tow bar (30) from the side position to the central position; and
- towing the trailer (10) to a destination at a distance from said location.

8. The method according to claim 7, wherein the trailer is of the type according to any one of claims 1-6, wherein the method further comprises:
- bringing the tow bar upon arrival at the location from the swung-down to the swung-up condition; and
- after completion of the last treatment at said location, bringing the tow bar from the swung-up condition to the swung-down condition.

## Patentansprüche

1. Trailer (10) zur Behandlung vierbeiniger Tiere, umfassend:
- einen Boden (12) und einen Rahmen (14), der einen Tierstellraum (16) über dem Boden (12) begrenzt, welcher Tierstellraum (16) in Draufsicht im Wesentlichen länglich in einer Längsrichtung ist, um ein zu behandelndes Tier mit einer Medianebene in der Längsrichtung aufzunehmen, welcher Rahmen (14) eine Durchgangsöffnung (18) an einer Vorderseite des Tierstellraums (16) hat;
- eine Schranke (20), die beweglich ist zwischen einer offenen Position, in der ein Tier die Durchgangsöffnung (18) passieren kann, und einer geschlossenen Position in dem Durchgang (18), in der verhindert wird, dass ein Tier den Durchgang (18) passiert;
- eine Radaufhängung (22), die mindestens zwei Räder (24) mit dem Rahmen (14) verbindet, jedes Rad (24) drehbar um eine Radachse (26), verlaufend senkrecht zu einer Längsrichtung des Trailers (10), welche Radaufhängung (22) aus einer Fahrposition, in der der Rahmen (14) und der Boden (12) über einer Basis oder einem Boden gehalten wird und auf Rädern darüber beweglich ist, in eine operative Position, in der der Rahmen (14) auf der Bodenoberfläche ruht und die Räder (24) nach oben in Bezug auf den Rahmen (14) bewegt wurden, gebracht werden kann;
- eine Schleppstange (30), beweglich seitwärts in Bezug auf den Rahmen (14) und den Boden (12) zwischen einer zentralen Position, in der die Schleppstange (30) in einer Längsmedianebene in Bezug auf den Rahmen (14) und den Boden (12) hervorragt, und einer Seitenposition, in der mindestens ein Vorderteil (30a) der Schleppstange (30) in Bezug auf die Position der Schleppstange in der zentralen Position seitwärts bewegt wird, damit ein Tier zu oder aus dem Durchgang (18) passieren kann, um einen Bereich vor der Durchgangsöffnung (18) frei zu machen;
**dadurch gekennzeichnet, dass**
- das Vorderteil (30a) der Schleppstange (30), das über die Vorderseite des Rahmens (14) und des Bodens (12) hinaus verläuft, schwenkbar ist um eine horizontale Drehachse (50) zwischen einer abgeschwungenen Position, in der das Vorderteil im Wesentlichen in einer horizontalen Ebene verläuft, und einer aufgeschwungenen Position, in der das Vorderteil aufwärts von der Drehachse (50) im Wesentlichen in vertikaler Richtung verläuft.

2. Trailer nach Anspruch 1, wobei die Schleppstange (30) zwischen der zentralen Position und der Seitenposition schwenkbar ist.

3. Trailer nach Anspruch 1 oder 2, ferner umfassend eine Blockieranordnung (32), die angeordnet ist, um mindestens das Vorderteil (30a) der Schleppstange (30) gegen Seitwärtsbewegung zu blockieren, wobei die Blockieranordnung (32) bedienbar ist, um zwischen einer blockierten Position, in der die Blockieranordnung die Schleppstange gegen Seitwärtsbewegung blockiert, und einer unblockierten Position, in der die Schleppstange frei zwischen der zentralen Position und der Seitenposition beweglich ist, überzugehen.

4. Trailer nach Anspruch 3, wobei die Blockieranordnung (32) nahe der Vorderseite des Rahmens (14) und des Bodens (12) angeordnet ist.

5. Trailer nach Anspruch 3 oder 4, wobei die Blockieranordnung (32) eine Stift-und-Bohrungsanordnung umfasst, wobei die Stift-und-Bohrungsanordnung mindestens einen Stift (34) und mindestens eine Bohrung (36) nahe der Vorderseite des Rahmens (14) und des Bodens (12) umfasst, wobei die Bohrung (36) und der Stift (34) derart sind, dass die Schleppstange (30) in der zentralen Position gehalten wird, wenn der Stift (34) in der Bohrung (36) ist, und die Schleppstange (30) seitwärts beweglich ist, wenn der Stift (34) außerhalb der Bohrung (36) ist.

6. Trailer nach einem der vorhergehenden Ansprüche, wobei der Rahmen (14) Folgendes umfasst:
- einen ersten Querträger (40) an einer Vorderseite des Rahmens (14);
- einen zweiten Querträger (42), verlaufend parallel zu dem ersten Querträger (40); und
- einen ersten Längsträger (44) und einen zweiten Längsträger (46), die sich einander gegenüber befinden und von dem zweiten hinteren Querträger (42) zu dem ersten vorderen Querträger (40) verlaufen;
wobei ein erstes Ende (30b) der Schleppstange (30) mit dem zweiten Querträger (42) schwenkbar um einen Drehzapfen (38) verbunden ist und an den ersten Querträger (40) zur geführten Seitwärtsbewegung entlang eines Bogens um den Drehzapfen (38) schwenkbar ist.

7. Verfahren zur Vor-Ort-Behandlung vierbeiniger Tiere, wie etwa Vieh, an einem Standort, umfassend:
- die Bereitstellung eines Trailers (10) nach einem der vorhergehenden Ansprüche;
- das Schleppen des Trailers (10) zu dem Standort;
- das Bringen der Schleppstange aus der zentralen Position in die Seitenposition;
- das Behandeln der zu behandelnden Tiere in dem Trailer (10),
wobei die Tiere, zumindest vor oder nach der Behandlung, jeweils den Durchgang (18) und den Bereich vor dem Durchgang (18) neben der Schleppstange (30) in der Seitenposition passieren;
- nach Beendigung der letzten Behandlung an dem Standort, das Bringen des Trailers (10) aus der operativen Position in die Fahrposition und das Bringen der Schleppstange (30) aus der Seitenposition in die zentrale Position; und
- das Schleppen des Trailers (10) zu einer Bestimmung in einer Entfernung von dem Standort.

8. Verfahren nach Anspruch 7, wobei der Trailer von einem Typ nach einem der Ansprüche 1-6 ist, wobei das Verfahren ferner umfassend:
- das Bringen der Schleppstange bei Ankunft an dem Standort aus dem abgeschwungenen in den aufgeschwungenen Zustand; und
- nach Beendigung der letzten Behandlung, das Bringen der Schleppstange aus dem aufgeschwungenen Zustand in den abgeschwungenen Zustand.

## Revendications

1. Remorque (10) pour traiter des animaux quadrupèdes, comportant :
un plancher (12) et un châssis (14) qui délimite un espace d'installation (16) d'animal au-dessus dudit plancher (12), lequel espace d'installation (16) d'animal, vu en plan de dessus, est sensiblement allongé dans un sens longitudinal pour recevoir et maintenir en place un animal à traiter avec un plan médian dans ledit sens longitudinal, le châssis (14) ayant une ouverture formant passage (18) sur un côté avant de l'espace d'installation (16) d'animal ;
une barrière (20) qui est mobile entre une position d'ouverture pour laisser passer un animal par l'ouverture formant passage (18) et une position de fermeture dans ledit passage (18) pour empêcher un animal de passer par le passage (18) ;
une suspension (22) de roues reliant au moins deux roues (24) au châssis (14), chaque roue (24) pouvant tourner autour d'un essieu (26) de roue s'étendant perpendiculairement à un sens longitudinal de la remorque (10), la suspension (22) de roues pouvant être amenée à passer d'une position d'entraînement, dans laquelle le châssis (14) et le plancher (12) sont maintenus au-dessus d'une base ou d'un sol et sont mobiles sur des roues sur la base ou le sol, à une position opérationnelle dans laquelle le châssis (14) repose sur la surface du plancher et les roues (24) se sont élevées par rapport au châssis (14) ;
une barre de remorquage (30) qui est mobile latéralement par rapport au châssis (14) et au plancher (12) entre une position centrale, dans laquelle la barre de remorquage (30) dans un plan longitudinal médian fait saillie vers l'avant par rapport au châssis (14) et au plancher (12), et une position latérale dans laquelle au moins une partie avant (30a) de la barre de remorquage (30), par rapport à la position de la barre de remorquage dans la position centrale, est déplacée latéralement pour, dans le but de faire entrer ou sortir l'animal par le passage (18), libérer une zone en face de ladite ouverture formant passage (18) ;
**caractérisée en ce que**
- la partie avant (30a) de la barre de remorquage (30) qui s'étend au-delà de l'avant du châssis (14) et du plancher (12) peut pivoter autour d'un axe de pivotement horizontal (50) entre une position basse de pivotement dans laquelle ladite partie avant s'étend sensiblement dans un plan horizontal et une position haute de pivotement dans laquelle ladite partie avant s'étend vers le haut, sensiblement verticalement, depuis ledit axe de pivotement (50).

2. Remorque selon la revendication 1, dans laquelle la barre de remorquage (30) peut pivoter entre la position centrale et la position latérale.

3. Remorque selon la revendication 1 ou 2, comportant en outre un système de blocage (32) conçu pour empêcher au moins ladite partie avant (30a) de la barre de remorquage (30) de bouger latéralement, ledit système de blocage (32) servant à réaliser une transition entre une position de blocage, dans laquelle ledit système de blocage empêche la barre de remorquage de bouger latéralement, et une position sans blocage, dans laquelle la barre de remorquage est mobile librement entre la position centrale et la position latérale.

4. Remorque selon la revendication 3, dans laquelle le système de blocage (32) est disposé près de l'avant du châssis (14) et du plancher (12).

5. Remorque selon la revendication 3 ou 4, dans laquelle le système de blocage (32) comprend un système à goupille et trou, le système à goupille et trou comprenant au moins une goupille (34) et au moins un trou (36) près de l'avant du châssis (14) et du plancher (12), le trou (36) et la goupille (34) étant tels que la barre de remorquage (30) est maintenue dans la position centrale quand la goupille (34) est dans le trou (36) et que la barre de remorquage (30) est mobile latéralement lorsque la goupille (34) est hors du trou (36).

6. Remorque selon l'une quelconque des revendications précédentes, dans laquelle le châssis (14) comprend :
- une première poutre transversale (40) à l'avant du châssis (14) ;
- une seconde poutre transversale (42) s'étendant parallèlement à la première poutre transversale (40) ; et
- une première poutre longitudinale (44) et une seconde poutre longitudinale (46) qui sont situées à l'opposé l'une de l'autre et s'étendent de la seconde poutre transversale, arrière (42) à la première poutre transversale, avant (40) ;
une première extrémité (30b) de la barre de remorquage (30) étant reliée à la seconde poutre transversale (42) de manière à pouvoir pivoter autour d'un pivot (38) et étant accouplée avec la première poudre transversale (40) pour le guidage d'un mouvement latéral suivant un arc autour dudit pivot (38).

7. Procédé pour traiter sur place, à un endroit, des animaux quadrupèdes tels que du bétail, comportant :
- la fourniture d'une remorque (10) selon l'une quelconque des revendications précédentes ;
- le remorquage de la remorque (10) jusqu'à l'endroit ;
- le passage de la remorque (10) de la position d'entraînement à la position opérationnelle ;
- le passage de la barre de remorquage de la position centrale à la position latérale ;
- le traitement, dans la remorque (10), des animaux à traiter,
les animaux, au moins avant ou après le traitement, passant chacun par ledit passage (18) et ladite zone en face dudit passage (18) près de la barre de remorquage (30) dans la position latérale ;
- au terme du dernier traitement audit endroit, le passage de la remorque (10) de la position opérationnelle à la position d'entraînement et le passage de la barre de remorquage (30) de la position latérale à la position centrale ; et
- le remorquage de la remorque (10) jusqu'à une destination distante dudit endroit.

8. Procédé selon la revendication 7, dans lequel la remorque est du type selon l'une quelconque des revendications 1 à 6, le procédé comportant en outre :
- le passage de la barre de remorquage, au moment de l'arrivée à l'endroit, de la position basse de pivotement à la position haute de pivotement ; et
- au terme du dernier traitement audit endroit, le passage de la barre de remorquage de la position haute de pivotement à la position basse de pivotement..
